# DEMANDE DE BREVET EUROPEEN

(11) **EP 0 783 212 A1**
(43) Date de publication de la demande: **09.07.1997**
(21) Numéro de dépôt: 96402814.6
(22) Date de dépôt: 19.12.1996
(51) Int. Cl.: H04B 10/207, H04B 10/17

(54) **Système de répartition de signaux optiques**

(30) Priorité: 28.12.1995 FR 9515656
(71) Demandeur: ALCATEL N.V., 2288 BH Rijswijk (NL)
(72) Inventeur: Bayart, Dominique, 92140 Clamart (FR); Chiaroni, Dominique, 92160 Antony (FR)
(74) Mandataire: Scheer, Luc

(57) **Abrégé**

L'invention concerne un système de répartition de signaux optiques amplifiés comprenant un coupleur optique en étoile (32) à au moins deux entrées, chaque entrée du coupleur (32) étant raccordée à la sortie d'un amplificateur optique (31₁ à 31ₙ) à l'entrée duquel est appliqué un signal optique.

Selon l'invention, les amplificateurs optiques (31₁ à 31ₙ) sont des amplificateurs optiques dont les gains sont maintenus constants.

## Description

Le domaine de l'invention est celui de la transmission ou de la commutation de signaux optiques et concerne plus précisément un système de répartition de signaux optiques amplifiés.

On entend par système de répartition un système employant un élément de répartition à au moins deux entrées, tel que défini ci-après, dont chaque entrée est raccordée à la sortie d'un amplificateur optique à l'entrée duquel est appliqué un signal optique à amplifier. Ces signaux optiques à amplifier sont véhiculés sur des liaisons optiques, classiquement constituées par des fibres optiques. Chaque liaison optique peut éventuellement véhiculer une pluralité de transmissions numériques (canaux), par exemple multiplexées en longueurs d'ondes ou en temps.

On entend par élément de répartition un coupleur optique en étoile. Un coupleur en étoile sert à effectuer des combinaisons des signaux appliqués à ses entrées, chaque sortie de cet élément fournissant un signal égal à la somme des signaux présents aux entrées. Un tel coupleur optique a de manière générale n entrées, m sorties et achemine un canal de transmission d'une voie d'entrée sur toutes les m voies de sortie, le nombre m de sorties étant indépendant du nombre n d'entrées.

Le problème rencontré avec les coupleurs en étoile actuels est qu'ils présentent des pertes d'insertion et de division relativement élevées, fonctions de l'ordre de division. Ces pertes peuvent être compensées par la présence des amplificateurs précités.

Classiquement, ces amplificateurs fonctionnent en régime de saturation afin de disposer de puissances de sortie élevées. On corrige ainsi une fluctuation de puissance d'émission à l'autre extrémité de la liaison.

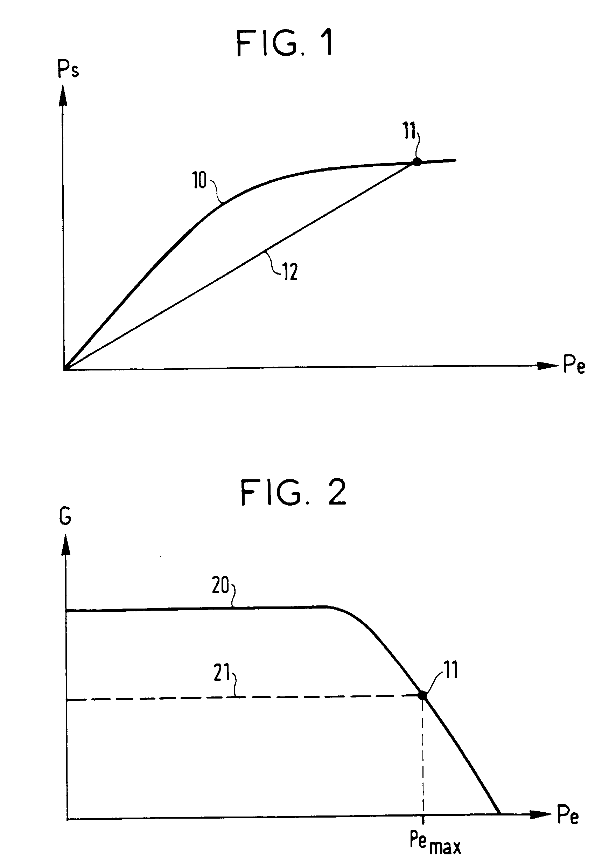

La figure 1 montre la caractéristique Ps = f(Pe) d'un amplificateur optique fonctionnant en saturation, et la figure 2 la caractéristique G = f(Pe) d'un tel amplificateur optique, avec Pe la puissance d'entrée, Ps la puissance de sortie et G le gain exprimé en dB. Ces caractéristiques sont données pour une puissance de pompe optique constante.

Sur la figure 1, la caractéristique 10 montre que pour une puissance d'entrée Pe faible, la puissance de sortie Ps varie linéairement. Lorsque la puissance d'entrée Pe augmente, la puissance de sortie Ps présente une saturation. Le gain G de l'amplificateur est donné par Ps/Pe dans une bande optique de référence et donc par la pente de la caractéristique 10. Comme indiqué précédemment, l'amplificateur fonctionne en saturation et son point de fonctionnement est par exemple le point 11.

Sur la figure 2 est représenté le G d'un amplificateur optique fonctionnant en régime de saturation en fonction de la puissance d'entrée Pe. Cette caractéristique est notée 20. Lorsque la puissance du signal d'entrée augmente, le gain sature et diminue. On observe donc une compression du gain. Le point de fonctionnement est également référencé 11.

Les amplificateurs optiques présentent un temps de réponse important : une variation de puissance d'entrée pendant un intervalle de temps inférieur à environ 10 ms passera inaperçue pour l'amplificateur c'est à dire que sa puissance de sortie ne variera pas. C'est pourquoi on considère les puissances d'entrée Pe et de sortie Ps comme des puissances moyennes. Ainsi, on considérera que la puissance d'entrée Pe présente une variation lorsque le nombre de canaux véhiculés par la liaison correspondante changera. Une variation du nombre de canaux peut notamment résulter d'une baisse ou d'une hausse de trafic, ou d'un changement d'allocation. On voit alors qu'une modification du nombre de canaux entraîne une variation de la puissance de sortie Ps de l'amplificateur.

De plus, toute liaison présente un bruit optique erratique (bruit blanc). Ainsi, lorsque peu de canaux optiques sont à amplifier, la puissance d'entrée Pe est faible mais le gain G est maximal et les bruits incidents ou créés de manière interne par l'amplificateur sont plus amplifiés qu'il ne le seraient pour un nombre de canaux à amplifier plus important.

Lorsque des amplificateurs fonctionnant en saturation sont utilisés en amont d'un coupleur en étoile, on observe, en fonction des variations du nombre de canaux véhiculés et donc de la puissance moyenne totale, des variations de charge de puissance moyenne de chaque amplificateur. Ces amplificateurs n'ont donc pas le même gain et il s'en suit qu'à la sortie du coupleur en étoile combinant les différentes voies d'entrée sur différentes voies de sortie, le rapport S/B de tous les canaux de toutes les voies de sortie (ainsi que leur niveau de puissance) est affecté par les variations de charge d'une ou plusieurs voies d'entrée. Autrement dit, lorsqu'un canal d'une voie n'est pas utilisé (absence de données à transmettre ou silence d'un abonné dans le cas d'une transmission de signaux de parole), le bruit observé sur chaque voie de sortie est plus important que lorsque ce canal est utilisé. En effet, le problème est qu'un élément de répartition à plusieurs entrées, tel qu'un combineur ou un coupleur en étoile, s'il divise le signal utile - correspondant à une longueur d'onde donnée et appliqué à une entrée donnée - sur ses sorties, réalise également une sommation de tous les niveaux de bruit présents sur ses entrées sur ses différentes sorties.

Une solution possible pour remédier à ce problème (hormis celle consistant à ne pas amplifier les signaux optiques avant l'élément de répartition, ce qui donne des performances moindres en terme de rapport S/B) est d'utiliser des amplificateurs qui ne sont pas saturés, c'est à dire où la puissance d'entrée Pe ne provoque pas de compression de gain.

Ces amplificateurs comportent par exemple chacun une fibre optique courte soumise à un fort flux de pompage. Cependant, cette solution n'est pas intéressante économiquement car les performances de ces amplificateurs optiques sont limitées (gain de l'ordre de 10 dB seulement) et ils nécessitent une puissance de pompage importante.

La présente invention a notamment pour objectif de remédier à ces inconvénients.

Plus précisément, un des objectifs de l'invention est de fournir un système de répartition de signaux optiques comprenant un coupleur optique en étoile à chaque entrée duquel est disposé un amplificateur, dans lequel une baisse de charge d'un amplificateur, c'est à dire une diminution de la puissance moyenne à son entrée, n'entraîne pas une détérioration du rapport S/B à la (aux) sortie(s) de ce coupleur.

Cet objectif, ainsi que d'autres qui apparaîtront par la suite, est atteint grâce à un système de répartition de signaux optiques amplifiés comprenant un coupleur optique en étoile à au moins deux entrées, chaque entrée de ce coupleur étant raccordée à la sortie d'un amplificateur optique à l'entrée duquel est appliqué un signal optique. Selon l'invention, les amplificateurs optiques sont des amplificateurs optiques dont les gains sont maintenus constants.

Ces gains peuvent être maintenus constants par asservissement des puissances de pompe des amplificateurs optiques ou en faisant fonctionner les amplificateurs optiques en régime laser. Il est également possible de prévoir un canal de transmission supplémentaire dont la fonction est de compenser une variation de puissance moyenne à l'entrée d'un amplificateur, cette variation étant due à l'apparition ou à la disparition d'un ou de plusieurs canaux de communication.

Les amplificateurs optiques utilisés peuvent indifféremment être des amplificateurs à fibre ou des amplificateurs à semi-conducteurs.

D'autres caractéristiques et avantages de l'invention apparaîtront à la lecture de la description suivante d'un mode de réalisation préférentiel, donné à titre illustratif et non limitatif, et des dessins annexés dans lesquels :
- la figure 1 montre la caractéristique Ps = f(Pe) d'un amplificateur optique fonctionnant en saturation ;
- la figure 2 montre la caractéristique G = f(Pe) d'un amplificateur optique fonctionnant en saturation ;
- la figure 3 montre un système de répartition selon la présente invention ;
- la figure 4 montre une simulation de l'effet du contrôle du gain des amplificateurs sur le rapport signal à bruit.

Les figures 1 et 2 ont été décrites précédemment en référence à l'état de la technique.

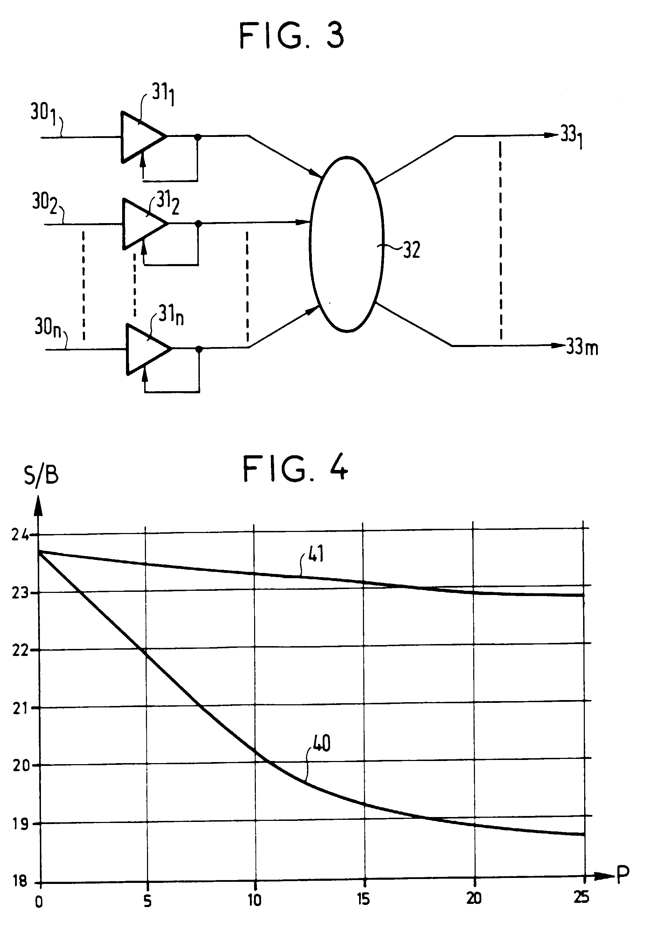

La figure 3 montre un système de répartition selon la présente invention.

De même que dans l'état de la technique précédemment présenté, des signaux optiques sont véhiculés sur des liaisons optiques 30₁ à 30ₙ. Chacun de ces signaux optiques est par exemple constitué par une communication numérique ou par un multiplex temporel ou fréquentiel de canaux de communications. Les différents signaux optiques sont appliqués à des amplificateurs 31₁ à 31ₙ dont les sorties sont reliées à un élément de répartition 32 constitué par un coupleur optique en étoile comportant au moins deux entrées et un nombre m de sorties référencées 33₁ à 33ₘ.

Selon l'invention, les amplificateurs optiques 31₁ à 31ₙ sont des amplificateurs optiques dont les gains sont maintenus constants. En d'autres termes, le gain et donc l'amplification des signaux est indépendante de la puissance d'entrée moyenne observée. Un signal de faible amplitude sera alors amplifié avec le même gain qu'un signal de forte amplitude. La dynamique d'amplification est donc identique pour les petits et forts signaux.

De même, l'asservissement du gain permet d'être indépendant du nombre de canaux véhiculés par chaque liaison. Ainsi; le bruit d'une liaison n'est pas plus amplifié que le signal utile véhiculé par cette liaison et une diminution de la puissance moyenne à l'entrée d'un amplificateur n'entraîne pas une détérioration du rapport S/B sur les sorties 33₁ à 33ₘ du coupleur 32.

La caractéristique 12 sur la figure 1 correspond à la caractéristique Ps=f(Pe) d'un tel amplificateur dont le gain est maintenu constant en fonction de la puissance d'entrée. On constate que la pente de cette caractéristique est constante, et donc le gain également.

La caractéristique 21 de la figure 2 montre le résultat obtenu. Le gain est constant quelle que soit la puissance moyenne du signal d'entrée, jusqu'à une valeur maximale Peₘₐₓ.

L'avantage de l'invention par rapport à l'état de la technique est que le niveau de bruit en sortie des amplificateurs est identique d'un amplificateur à l'autre et que ce niveau de bruit est temporellement constant, quel que soit la charge en entrée, du moment que l'on s'arrange pour avoir des amplificateurs identiques.

Chaque amplificateur peut être réalisé selon la technique décrite dans la demande de brevet français n°2.714.982 intitulée "Amplificateur optique régulé" et intégrée dans la présente demande dans son intégralité. Ce document décrit un amplificateur optique régulé comportant un guide amplificateur et une boucle d'asservissement de la puissance d'une émission spontanée amplifiée et guidée par ce guide amplificateur. Le gain de l'amplificateur y est maintenu constant par asservissement, en utilisant comme valeur de consigne l'émission contra-directionnelle et en modifiant la puissance de pompe de l'amplificateur.

D'autres techniques de contrôle de gain d'amplificateurs optiques sont décrites dans l'article "Gain Control in Erbium-Doped Fibre Amplifiers by Lasing at 1480 nm with Photoinduced Bragg Gratings Written on Fibre Ends" de E. Delevaque, T. Georges, J.F. Bayon, M. Monerie, P. Niay et P. Bernage, Electronics Letters, 10 juin 1993, vol.29, n°12, pp.1112 à 1114, et dans l'article "Gain Monitoring of Erbium-Doped Fiber Amplifiers by Detecting Spontaneous Emission" de H. Masuda et K. Aida, IEEE Photonics Technology Letters, vol.5, n°9, septembre 1993, pp.1017 à 1019. Le premier article propose de faire fonctionner les amplificateurs en régime laser afin d'obtenir un gain constant.

On pourra également se référer aux brevets américains n°5.117.196 et n°5.396.360 qui sont également intégrés dans la présente demande par référence.

Les liaisons 30₁ à 30ₙ sont de type multi-longueur d'ondes, c'est à dire véhiculent une pluralité de longueurs d'ondes, chaque longueur d'onde correspondant à un canal de communication. Les amplificateurs présentent alors une caractéristique d'amplification constante en fonction de la longueur d'onde.

Le coupleur 32 est classiquement passif et présente au moins deux accès d'entrée.

Lorsque plusieurs amplificateurs optique dont les gains sont maintenus constants par effet laser (voir article précité) sont utilisés, il est avantageux de prévoir un partage d'un même module de pompage optique. Les amplificateurs peuvent alors avoir le même gain (en pratique des gains voisins) et le nombre de diodes est inférieur au nombre d'amplificateurs.

Une autre manière de maintenir le gain de chaque amplificateur constant est de prévoir un canal de transmission supplémentaire dont la puissance est modifiée en fonction de l'ajout ou de la suppression d'autres canaux. En cas de suppression de canaux, la puissance des signaux véhiculés par ce canal supplémentaire est augmentée de la puissance de ces canaux supprimés, et réciproquement.

Les amplificateurs optiques utilisés peuvent être indifféremment des amplificateurs à fibre ou des amplificateurs à semi-conducteurs.

La figure 4 montre une simulation de l'effet du contrôle du gain des amplificateurs sur le rapport S/B. Les conditions de départ sont les suivantes : on considère un coupleur optique en étoile à 16 entrées, chaque entrée recevant un signal optique amplifié correspondant au plus à 16 canaux de transmission multiplexés en longueur d'onde. Chaque amplificateur peut donc avoir à amplifier entre 0 et 16 canaux selon le trafic. L'abscisse de la figure 4 correspond à la variation de puissance P en dB à l'entrée de la moitié des amplificateurs, l'ordonnée au rapport S/B en dB mesuré dans une largeur de bande de 1 nm sur un canal, à l'une des sorties du coupleur optique en étoile.

On constate que sans contrôle de gain (caractéristique 40), une variation de charge de 25 dB entraîne une diminution du rapport S/B de 5 dB. Avec un contrôle de gain (caractéristique 41), cette même variation de charge entraîne une diminution du rapport S/B inférieure à 1 dB.

Ainsi, l'utilisation d'amplificateurs à gain constant permet de combiner les signaux de plusieurs voies tout en étant indépendant du trafic d'informations.

## Revendications

1. Système de répartition de signaux optiques amplifiés comprenant un coupleur optique en étoile (32) à au moins deux entrées, chaque entrée dudit coupleur (32) étant raccordée à la sortie d'un amplificateur optique (31₁ à 31ₙ) à l'entrée duquel est appliqué un signal optique, caractérisé en ce que lesdits amplificateurs optiques (31₁ à 31ₙ) sont des amplificateurs optiques dont les gains sont maintenus constants.

2. Système selon la revendication 1, caractérisé en ce que lesdits gains sont maintenus constants par asservissement des puissances de pompe desdits amplificateurs optiques (31₁ à 31ₙ).

3. Système selon la revendication 1, caractérisé en ce que lesdits gains sont maintenus constants en faisant fonctionner lesdits amplificateurs optiques (31₁ à 31ₙ) en régime laser.

4. Système selon la revendication 1, caractérisé en ce que le gain de chacun desdits amplificateurs optiques (31₁ à 31ₙ) est maintenu constant en faisant varier la puissance d'un canal supplémentaire appliqué audit amplificateur optique (31₁ à 31ₙ).

5. Système selon l'une des revendications 1 à 4, caractérisé en ce que lesdits amplificateurs optiques (31₁ à 31ₙ) sont des amplificateurs à fibre.

6. Système selon l'une des revendications 1 à 4, caractérisé en ce que lesdits amplificateurs optiques (31₁ à 31ₙ) sont des amplificateurs à semi-conducteurs.
